(19) **Europäisches Patentamt / European Patent Office / Office européen des brevets**

(11) **EP 2 781 009 B1**

(12) **FASCICULE DE BREVET EUROPEEN**

(45) Date de publication et mention
de la délivrance du brevet:
**26.07.2017 Bulletin 2017/30**

(21) Numéro de dépôt: **12795532.6**

(22) Date de dépôt: **13.11.2012**

(51) Int Cl.:
*H02K 37/16* (2006.01)   *H02K 7/116* (2006.01)
*F16H 57/00* (2012.01)

(86) Numéro de dépôt international:
**PCT/FR2012/052611**

(87) Numéro de publication internationale:
**WO 2013/072615 (23.05.2013 Gazette 2013/21)**

(54) **MODULE INDICATEUR POUR TABLEAU DE BORD A MOUVEMENT FLUIDE**

ANZEIGEMODUL FÜR EIN ARMATURENBRETT MIT FLÜSSIGKEITSBEWEGUNG

DISPLAY MODULE FOR AN INSTRUMENT PANEL WITH FLUID MOVEMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.11.2011 FR 1160300**

(43) Date de publication de la demande:
**24.09.2014 Bulletin 2014/39**

(73) Titulaire: **Moving Magnet Technologies
25000 Besançon (FR)**

(72) Inventeur: **HEINRICH, Sébastien
25310 Herimoncourt (FR)**

(74) Mandataire: **IP Trust
2, rue de Clichy
75009 Paris (FR)**

(56) Documents cités:
EP-A1- 1 458 082      EP-A2- 1 244 200
EP-A2- 1 450 138      DE-A1- 19 633 345
JP-A- 2004 251 354

EP 2 781 009 B1

## Description

Domaine de l'invention

La présente invention concerne le domaine des moteurs électriques pas-à-pas pour le positionnement précis d'un organe, selon une position angulaire généralement inférieure à 360°. Il concerne plus particulièrement un module indicateur de tableau de bord.

Etat de la technique

On connaît, dans l'état de la technique, le brevet américain US 6043574 décrivant un moteur diphasé formé par une partie statorique excitée par des bobines électriques et par un rotor aimanté présentant N paires de pôles aimantés radialement en sens alternés, N étant égal à 3 ou à 5. La partie statorique présente au moins deux circuits en forme de W comportant chacun une bobine électrique entourant la jambe centrale. Les circuits en W sont disposés de façon à ce que lorsque l'une des jambes centrales se trouve en face d'une transition magnétique, l'autre jambe centrale se trouve en face d'un pôle magnétique. Les épanouissements polaires des jambes d'un circuit en W étant espacés angulairement de n/4 et les épanouissements polaires des jambes centrales de deux circuits en W appartenant à des phases différentes étant écartés angulairement d'un angle sensiblement égal à $\pi/2 \pm k.\pi/N$, où N est le nombre de paires de pôles magnétiques, soit 3 ou 5 et k est égal à 0, 1, ou 2.

On connaît également le brevet français FR2807160 de la société DENSO, décrivant un appareil de mesure indicateur comprenant un cadran, un boîtier disposé derrière le cadran, une section de commande d'entraînement disposée dans le boîtier, un arbre rotatif entraîné par la section de commande d'entraînement.

L'arbre rotatif est composé de deux arbres fins supportés respectivement par deux paliers et d'un arbre épais reliant les deux arbres fins. La longueur et le diamètre extérieur de chaque arbre fin sont tels que le rapport de la longueur sur le diamètre extérieur garantit une résistance à la flexion suffisante. Par conséquent, l'arbre rotatif tourne sans à-coup et une aiguille indicatrice portée par l'arbre indique des valeurs précises d'une condition de fonctionnement du véhicule.

L'objectif technique des solutions de l'art antérieur est d'augmenter le couple et d'éliminer la pièce de fermeture de flux sans perdre l'avantage de la simplicité de la fabrication et les possibilités d'intégration des mécanismes associés tels les réducteurs.

On connaît également la demande de brevet japonais JP2004251354 décrivant un actionneur améliorer afin de remédier au problème l'écoulement de l'huile de lubrification vers un arbre de rotation de sortie.

Ce brevet décrit un actionneur pour un appareil de mesure comprenant un boîtier, un rotor entraîné en rotation par interaction avec un stator et un train d'engrenages de réduction de vitesse pour décélérer la rotation du rotor.

Le réducteur de vitesse comprend un train d'engrenages réducteurs de sortie dans lequel un arbre de rotation de sortie est placé au centre de la partie en saillie hors du boîtier, et les dents sont disposées sur le pourtour extérieur. Dans la roue dentée de sortie, les rainures sont formées de manière à empêcher l'huile lubrifiante de s'écouler de la partie des dents de l'arbre de rotation de sortie. Les rainures sont prévues dans la direction de rayon de l'engrenage de sortie autour de l'arbre de rotation de sortie.

Le dispositif présente des bras qui sont destinés à récupérer l'huile, qui est transmise vers le siège pour éviter que l'huile ne vienne se répandre sur la fenêtre d'affichage.

Ces bras frotteurs ont une fonction d'évacuation d'huile.

On connaît également dans l'art antérieur l'actionneur décrit par le brevet européen EP1244200, comprenant un moteur pas à pas muni d'un rotor présentant une pluralité de pôles magnétiques le long de sa direction circonférentielle, une paire de culasses magnétiques agencé pour faire face aux pôles magnétiques du rotor, une paire de bobines d'excitation pour exciter la paire de culasses magnétiques respectivement en réponse à des impulsions qui ont produisent des différence de phase.

On connaît aussi les brevet européen EP1458082 et EP1450138 décrivant des variantes d'actionneurs.

Inconvénient de l'état de la technique.

Ces solutions de l'art antérieur sont globalement satisfaisantes, mais il apparaît que le déplacement de l'organe entraîné présente, dans certains cas, des à-coups, résultant d'une part du fonctionnement et caractéristiques du moteur (couple sans courant trop important et couple avec courant non constant) et d'autre part des jeux dans le train d'entraînement. Ces à-coups sont notamment présents lorsque certaines vitesses sont atteintes par l'indicateur. Du point de vue de l'utilisateur, le premier inconvénient est le manque de fluidité du mouvement perçu par l'utilisateur, ce qui représente un inconfort visuel ainsi qu'une perte de précision d'information. Le deuxième inconvénient, dû aux vibrations excessives produites par ces à-coups, est un bruit audible par l'utilisateur, représentant encore un inconfort. Enfin, ces mêmes vibrations peuvent avoir un effet néfaste sur la durée de vie de l'ensemble motorisé nécessitant son remplacement précoce.

Solution apportée par l'invention

Afin d'améliorer la fluidité de l'organe entraîné, la présente invention concerne selon son acception la plus générale un module indicateur présentant un moteur diphasé comportant un rotor présentant N paires de pôles aimantés radialement, en sens alternés, N étant égal à 3 ou à 5, et une partie statorique présentant au moins deux circuits en forme de W faites de dents polaires radiales s'étendant vers l'intérieur depuis une ceinture périphérique fermée et présentant une bobine sur la jambe centrale du W, lesdits circuits en forme de W étant disposés de façon à ce que lorsque la dent centrale de l'un des circuits en forme de W se trouve en face d'une transition magnétique rotorique, au moins une dent centrale d'un autre circuit en forme de W se trouve en face d'un pôle magnétique rotorique. De plus, il comporte au moins un moyen spécifique d'interaction mécanique entre le rotor et le stator assurant un frottement angulaire d'une force sensiblement constante en fonction de la vitesse relative du rotor par rapport au stator, et d'une valeur inférieure au couple produit par l'interaction électromagnétique entre le rotor et le stator. Ce frottement angulaire est un frottement sec, qui exerce une force qui s'oppose au mouvement relatif des deux corps en contact, en l'absence de lubrifiant. Le frottement sec, entre deux surfaces non lubrifiées, est un phénomène complexe se caractérisant par le fait que :

- la force de frottement est proportionnelle à la force qui presse les deux surfaces l'une contre l'autre.
- la force de frottement est indépendante de l'aire apparente de contact.
- la force de frottement cinétique est indépendante de la vitesse relative des deux surfaces.

Le capteur selon l'invention ne contient aucun lubrifiant, et en particulier l'espace contenant les engrenages sont dépourvus de lubrifiant et notamment de lubrifiant liquide.
Le frottement présente une composante perpendiculaire parallèle à l'axe de rotation assurant l'appui des deux surfaces en contact, et une composante tangentielle produisant l'effort de résistance au déplacement angulaire par l'interaction des deux surfaces en contact.
L'interposition d'un moyen de frottement est très inhabituelle pour l'homme du métier, qui cherche généralement à réduire les frottements dans son système.
Le couple de frottement à produire doit être réalisé en regard du couple résiduel du moteur, c'est-à-dire le couple d'interaction sans courant entre le rotor aimanté et les pôles ferromagnétiques du stator. De préférence, le frottement introduit doit produire un couple, avantageusement compris entre le couple résiduel (sans courant) et le couple moteur (avec courant).
De manière préférentielle, ce couple sera au minimum deux fois supérieur au maximum du couple résiduel du moteur. Ce faisant, ce couple de frottement permettra de garantir un déplacement fluide de l'indicateur actionné par le moteur et réduira le bruit de fonctionnement.
Ce frottement sec crée une perturbation $C_0$ couple sans courant. Avantageusement ce couple de friction minimum est environ 2 fois supérieur au couple résiduel sans courant $C_0$.
Selon un mode de réalisation préféré, le module comporte plus précisément un boîtier solidaire du stator, un ensemble de réduction mécanique de vitesse du rotor comportant une roue de sortie entraînant un pointeur et un moyen spécifique d'interaction mécanique constitué par au moins un bras frotteur arqué réalisé découpé dans la partie discale de ladite roue de sortie et une piste de glissement solidaire dudit boîtier.
De manière préférentielle, ledit bras frotteur est réalisé en polymère polyoxyméthylène (POM). Compte-tenu de l'évolution du fluage mécanique de la matière, il conviendra, idéalement, de dimensionner le bras frotteur, selon les formules bien connues de résistance des matériaux et les coefficients de frottement connues du POM, afin d'obtenir un couple de frottement, à neuf (c'est-à-dire à la réalisation), bien supérieur au couple de frottement final visé (de l'ordre de 3 à 5 fois la valeur finale). Ainsi, pour un moteur dont le couple résiduel est de 20 $\mu$Nm pour lequel le frottement sur la roue de sortie à atteindre est donc de 40 $\mu$Nm, on dimensionnera le ou les bras frotteur afin d'obtenir un couple, à neuf, d'au moins 120 à 200 $\mu$Nm. Dans le temps, ou avec un vieillissement accéléré sous un gradient thermique important, le fluage de la matière (réduction du module mécanique) va entrainer une diminution du frottement qui se stabilisera vers la valeur finale voulue. En effet, il a été observé expérimentalement que le Delrin pouvait perdre près de 80% de son module d'élasticité (module d'Young) mécanique sous contrainte.
De manière préférentielle encore, ladite piste de glissement vient en contact avec l'extrémité desdits frotteurs et est de forme bombée avec un rayon typiquement voisin de 0.4mm.
De préférence, le module comporte N bras frotteurs flexibles, dont les extrémités glissantes sont espacées de 360/N degrés, N étant égal à 2 ou 3.
Selon une variante particulière, le stator présente une ceinture annulaire, un ensemble de dents s'étendant radialement à partir d'un segment annulaire formant un épaulement de fixation sur le boîtier présentant un moyen de liaison mécanique de forme complémentaire.
Cet épaulement permet d'assurer une liaison mécanique d'une grande raideur entre le stator et le boîtier et de réduire une source de jeu entre le stator et le rotor par l'intermédiaire du boîtier.
Selon une autre variante avantageuse, le stator présente au moins cinq dents de longueurs, mesurées radialement, identiques. Cette réalisation permet de réduire une autre source d'à-coup.
De préférence, pour les circuits en forme de W, la longueur des dents bobinées est identique.
Avantageusement, la longueur de la bobine et des dents portant ladite bobine sont sensiblement égales mais inférieures à la section de la zone centrale évidée du stator.

Selon un mode de réalisation préféré, l'extrémité des dents est de forme parallélépipédique. Cette solution permet d'augmenter le couple avec courant et ainsi contribuer à l'amélioration de la fluidité du déplacement.

Description détaillée des figures

Les caractéristiques et avantages de l'invention ressortiront à la lecture qui suit d'exemples de réalisation détaillés, en référence aux figures annexées qui représentent respectivement :

- la figure 1, une vue en trois-quarts d'un premier module selon un mode de réalisation de l'invention avec le couvercle supérieur du boîtier retiré ;
- la figure 2, une vue en trois-quarts d'un premier module selon le mode de réalisation de l'invention avec le couvercle inférieur du boîtier retiré ;
- la figure 3, une vue isolée du couvercle inférieur du boîtier moteur ;
- la figure 4, une vue isolée de trois-quarts de la roue de sortie du réducteur mécanique intégré au premier module indicateur ;
- la figure 5, une vue isolée de face de la roue de sortie du réducteur mécanique intégré au premier module indicateur ;
- la figure 6, une vue de coupe du premier module indicateur ;
- la figure 7, une vue de détail de la vue de coupe montrée en figure 6 ;
- la figure 8, une vue isolée du stator ferromagnétique doux du moteur intégré au premier module indicateur ;
- la figure 9, une vue isolé d'un pointeur entrainé par le premier module indicateur.
- la figure 10, une vue de trois-quart d'un deuxième module indicateur selon un second mode de réalisation de l'invention avec le couvercle inférieur du boîtier retiré.

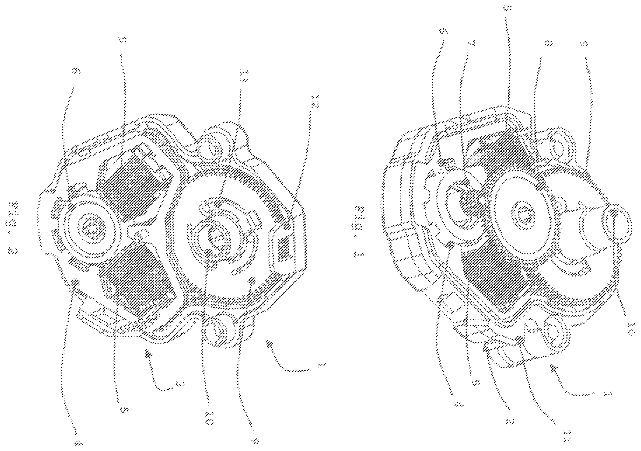

La figure 1 présente un module indicateur 1 selon une vue de trois-quarts sans le couvercle supérieur, référencé 3 sur la figure 2. Ce couvercle supérieur 3 forme, avec le couvercle inférieur 2, un boîtier contenant l'ensemble des éléments permettant la rotation d'un organe à commander, en l'occurrence une aiguille indicatrice ou pointeur, non montrée ici. Le couvercle inférieur 2 présente deux pattes de connexion mécanique déformable 11 permettant le positionnement du boîtier sur un circuit imprimé non montré ici.

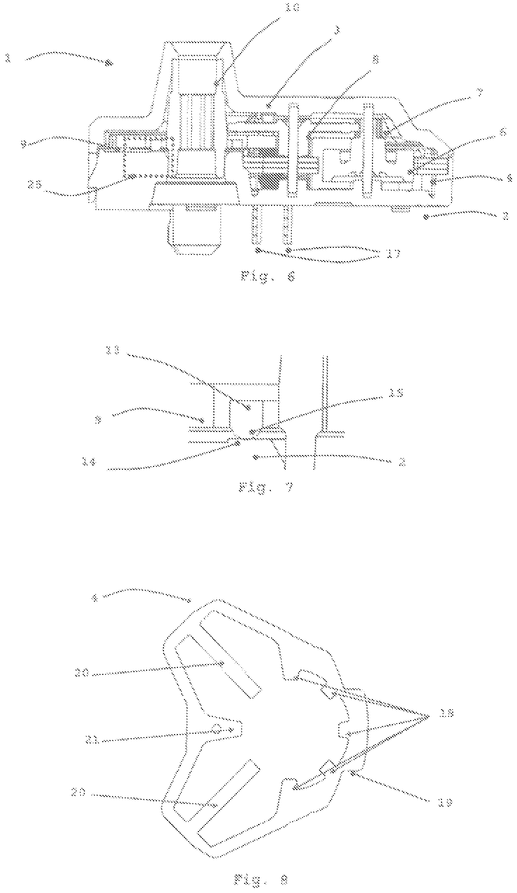

A l'intérieur du module indicateur 1 se trouve un moteur composé d'un stator ferromagnétique doux 4 formé de plusieurs dents, référencées 18, 20, 21 en Figure 8, dont deux dents 20 portent des bobines 5 destinées à être alimentées en courant électrique. Le flux magnétique produit par ces bobines 5 coopère avec un rotor aimanté 6 présentant N pôles, N étant égal à 3 ou 5, afin de mettre en mouvement le rotor aimanté 6 relativement au stator ferromagnétique doux 4.

Afin de réduire la vitesse de rotation de l'organe à déplacer, un ensemble de réduction comporte une première roue 7 solidaire du rotor aimanté 6, une roue intermédiaire 8 engrenant sur la première roue 7 et une roue de sortie 9. Le système de réduction ainsi formé comprend trois roues distinctes.

La troisième et dernière roue, la roue de sortie 9, s'étend axialement pour former un axe creux (10) recevant l'organe à piloter, en l'occurrence l'aiguille indicatrice non montrée ici.

La figure 2 présente le module indicateur 1 selon une vue de trois-quarts sans le couvercle inférieur 2. Ce couvercle inférieur 2 est connecté mécaniquement au couvercle supérieur 3 par l'élément de connexion 12. La roue de sortie 9 présente trois bras frotteur 13 découpés dans ladite roue de sortie 9 pouvant être déformés en flexion dans la direction axiale, c'est-à-dire selon l'axe de rotation de l'axe creux 10.

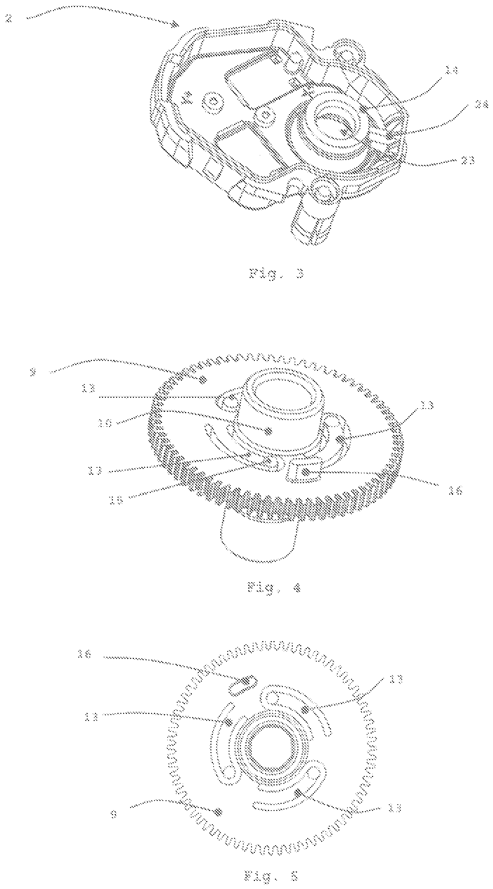

Ces bras sont délimités par une découpe en forme d'épingle à cheveu incurvée, l'extrémité arrière, opposée à l'extrémité glissante (15), étant un prolongement du moyeu de la roue (9). Ces bras frotteurs 13 sont destinés à être contraints mécaniquement lorsque les couvercles inférieur 2 et supérieur 3 sont montés ensemble pour former le boîtier, par appui de l'extrémité glissante, référencée sur la Figure 4, bombée des bras frotteurs 13 sur une piste de glissement, référencé 14 sur la Figure 3, solidaire du couvercle inférieur 2. La forme bombée de l'extrémité 15 permet d'assurer un contact ponctuel sûr. Cette forme bombée 15 produit une légère protubérance par rapport à la surface de la roue 9, qui met sous contrainte le bras. Cette contrainte assure une légère déformation du bras (avec un déplacement de la partie bombée de l'ordre de 0.15 à 0.25mm), par rapport à l'extrémité arrière, et produit une application avec une force parallèle à l'axe de rotation de la roue assurant un contact constant de la zone bombée, contre la piste de glissement 14.

Sur la figure 3, représentant ce couvercle inférieur 2, on peut voir la piste de glissement 14 circulaire sur le pourtour d'une ouverture 23 destinée à laisser passer l'axe creux 10 débouchant sur les deux couvercles inférieur 2 et supérieur 3.

Sur les vues isolées de la roue de sortie 9 montrée en figures 4 et 5, on peut mieux voir les trois bras frotteurs 13 répartis à 120° autour de l'axe creux 10. Ces trois bras frotteurs 13 sont découpés dans la roue suivant une certaine longueur et largeur qui doit être réglée de manière à assurer une raideur axiale optimale. Le dimensionnement exact de ces bras 13 est réalisé par calcul de résistance des matériaux. La matière plastique polymère type polyoxyméthylène (POM) est privilégiée car elle permet d'obtenir une raideur compatible avec l'application et la dimension de la roue de sortie 9 tout en conservant une résistance et tenue mécanique intéressante. Le dimensionnement de ces bras frotteurs 13 est réalisé par un calcul de résistance des matériaux considérant le bras 13 comme une poutre. La force de frottement permettant d'obtenir le couple de frottement voulu à appliquer à la roue de sortie 9, permet de dimensionner le bras par optimisation de la largeur et longueur du bras connaissant la déformation maximale admissible des bras 13 selon la formule suivante :

$$F = \frac{3.E.I_{GZ}.y}{l^3}$$

Où $E$ [N/m$^2$] est le module de Young du matériau utilisé, $I_{Gz}$ [m$^4$] est le moment quadratique de la poutre formée par rapport à l'axe de flexion, $y$ [m] est la déflection de l'extrémité glissante 15 bombée, et $1$ [m] la longueur du bras frotteur 13.

Chacun de ces bras frotteurs 13 présente donc une extrémité glissante 1) bombée qui vient en appui ponctuel glissant sur la piste de glissement 14 du couvercle inférieur 2.

A titre d'exemple particulièrement représentatif mais nullement limitatif, pour une roue de sortie ayant un diamètre de l'ordre de 10 mm, une solution efficace est de réaliser trois bras frotteurs de 1 mm de large sur un diamètre de 7.85 mm et d'une ouverture angulaire, chacun, proche de 75°.

Sur cette roue de sortie 9 est aussi réalisée, moulée, un arrêt mécanique 16 qui vient coopérer avec la butée 24 du couvercle inférieur 2, comme montré en figure 3, afin de constituer une contrainte mécanique interdisant à la roue de sortie 9 de réaliser une course angulaire trop importante.

Sur la figure 6 représentant une vue de coupe du module indicateur 1, on montre les pattes de connexion électriques 17 des bobines venant se fixer sur des pads de connexion liés au circuit imprimé (non montré). Plus particulièrement, sur cette figure 6, est pointée la roue de sortie 9. Le cadre pointillé 25 n'a pas de sens structurel mais représente la zone qui est montrée, avec plus de détails, en figure 7.

Sur cette figure 7, la roue de sortie 9 avec un de ses bras frotteurs 13 est montrée. Par le contact mécanique avec la piste de glissement 14 du couvercle inférieur 2, le bras frotteur 13 est contraint axialement en flexion assurant ainsi, lors du mouvement relatif de la roue de sortie 9 par rapport au couvercle 2, l'introduction d'un frottement de type coulombien permettant de limiter le débattement de la roue de sortie 9 occasionné soit par des couples avec et sans courant variant dans le temps, soit par des jeux mécaniques trop importants. Ce débattement, qui peut être plus ou moins important suivant la vitesse angulaire de la roue de sortie 9 est ainsi grandement limité par la présence des bras frotteurs 13 contraints et en contact avec le couvercle inférieur 2 via la piste de glissement 14 dudit couvercle inférieur 2. En fonction du type d'indicateur (taille, matière), la vitesse de rotation désirée et le niveau de qualité d'affichage demandé, le couple de frottement et donc le nombre et les dimensions des bras frotteurs 13 seront différents mais toujours guidés par le dimensionnement explicité plus haut. Une approche expérimentale est aussi d'une grande aide dans le dimensionnement pour tenir compte des éventuelles non linéarités du système mécanique ainsi que de l'évolution du fluage mécanique du matériau qui évolue avec le temps et nécessite une stabilisation temporelle et/ou thermique.

La figure 8 présente une vue isolée du stator ferromagnétique doux 4 dans son mode de réalisation préféré comprenant deux dents longues 20 portant les bobines électriques 5, une dent centrale 21 entre les deux dents longues 20, et cinq dents identiques 18. Ces dents forment ainsi deux circuits en forme de W dont une dent est commune à chacun. La répartition des dents permet une minimisation du couple sans courant et contribue ainsi à minimiser les à-coups sur l'aiguille indicatrice 22. Les dents ont des extrémités de forme parallélépipédique permettant de canaliser le flux magnétique de façon optimale contribuant à l'augmentation du couple avec courant.

Sur la forme extérieure du stator 4, un épaulement 19 est réalisé permettant une meilleure indexation du stator 4 dans le couvercle inférieur 2.

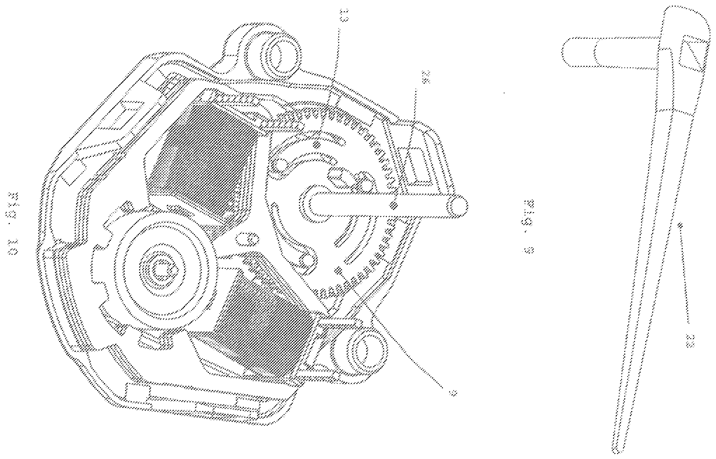

La figure 9 présente une aiguille indicatrice ou pointeur 22 entrainé par l'axe creux 10.

La figure 10 présente un deuxième module indicateur (1) selon un second mode de réalisation de l'invention. Ce deuxième module se distingue du premier en ce que la roue de sortie 9 n'est pas prolongée par un axe creux mais est solidaire d'une aiguille 26 qui est l'arbre de sortie moteur et destinée à entrainer en rotation un organe indicateur (non représenté). Le principe de l'invention n'est en effet pas limité aux seuls modules présentant des axes creux. La roue de sortie 9 présente, de même que pour le premier module, des bras frotteurs 13 découpés dans le matériau de la roue de sortie 9. Le nombre et la dimension de ces bras frotteurs 13 peut varier en fonction des enseignements décrits plus haut dans ce texte.

## Revendications

1.    Module indicateur présentant un moteur diphasé comportant un rotor (6) présentant N paires de pôles aimantés radialement, en sens alternés, N étant égal à 3 ou à 5, et une partie statorique (4) présentant au moins deux circuits en forme de W faites de dents polaires radiales (20) s'étendant vers l'intérieur depuis une ceinture périphérique fermée et présentant une bobine (5) sur la jambe centrale du W, lesdits circuits en forme de W étant disposés de façon à ce que lorsque la dent centrale de l'un des circuits en forme de W se trouve en face d'une transition magnétique rotorique, au moins une dent centrale d'un autre circuit en forme de W se trouve en face d'un pôle magnétique rotorique,

**caractérisé en ce que en ce qu'**il comporte au moins un moyen spécifique d'interaction mécanique (13, 14, 15) entre le rotor et le stator assurant un frottement angulaire sec d'une force sensiblement constante en fonction de la vitesse relative du rotor (6) par rapport au stator (4), et d'une valeur inférieure au couple produit par l'interaction électromagnétique entre le rotor et le stator.

2. Module indicateur selon la revendication 1 **caractérisé en ce qu'**il comporte en outre un boîtier solidaire (2) du stator, un ensemble de réduction mécanique de vitesse du rotor comportant une roue de sortie (9) entrainant un pointeur (22) et **en ce que** ledit moyen spécifique d'interaction mécanique est constitué par au moins un bras frotteur (13, 15) arqué réalisé découpé dans la partie discale de ladite roue de sortie et une piste de glissement (14) solidaire dudit boîtier.

3. Module indicateur selon la revendication 2 caractérisé en ce que ledit bras frotteur est réalisé en polymère polyoxyméthylène.

4. Module indicateur selon les revendications 2 ou 3 **caractérisé en ce que** ladite piste de glissement vient en contact avec l'extrémité (15) desdits frotteurs (13).

5. Module indicateur selon la revendication 4 **caractérisé en ce que** ladite extrémité est de forme bombée.

6. Module indicateur selon les revendications 2 à 5 **caractérisé en ce qu'**il comporte N bras frotteurs (13) flexibles, dont les extrémités glissantes sont espacées de 360/N degrés, N étant égal à 2 ou 3.

7. Module indicateur selon l'une au moins des revendications précédentes **caractérisé en ce que** le stator (4) présente une ceinture annulaire, un ensemble de dents (18) s'étendant radialement à partir d'un segment annulaire formant un épaulement (19) de fixation sur le boîtier (2) présentant un moyen de liaison mécanique de forme complémentaire.

8. Module indicateur selon l'une au moins des revendications précédentes **caractérisé en ce que** cinq dents au moins présentent des longueurs, mesurées radialement, identiques.

9. Module indicateur selon l'une au moins des revendications précédentes **caractérisé en ce que** la longueur des dents bobinées est identique.

10. Module indicateur selon la revendication précédente **caractérisé en ce que** la longueur de la bobine et des dents portant ladite bobine sont sensiblement égales mais inférieures à la section de la zone centrale évidée du stator.

11. **Module indicateur selon l'une au moins des revendications précédentes caractérisé en ce que l' extrémité des dents est de forme parallélépipédique.**

## Patentansprüche

1. Anzeigemodul mit einem Zweiphasenmotor mit Rotor (6), der N in abwechselnder Richtung radial magnetisierte Polpaare aufweist, wobei N gleich 3 oder 5 ist, und ein Statorteil (4) mit mindestens zwei w-förmigen Kreisen bestehend aus radialen Polarzähnen (20), die sich von einem geschlossenen umfänglichen Gürtel aus nach innen erstrecken und eine Wicklung (5) auf dem Mittelschenkel des W aufweisen, wobei besagte w-förmige Kreise so angeordnet sind, dass sich mindestens ein mittlerer Zahn eines anderen w-förmigen Kreises gegenüber einem magnetischen Rotorpol befindet, wenn der mittlere Zahn einer der w-förmigen Kreise gegenüber einem magnetischen Rotorübergang steht, **dadurch gekennzeichnet, dass** es mindestens ein spezifisches Mittel des mechanischen Zusammenwirkens (13, 14, 15) von Rotor und Stator aufweist, das eine trockene winkelförmige Reibung einer im Wesentlichen konstanten Kraft in Abhängigkeit von der Relativgeschwindigkeit des Rotors (6) in Bezug auf den Stator (4) aufweist, und einen Wert kleiner als das durch das elektromagnetische Zusammenspiel von Rotor und Stator erzeugte Drehmoment.

2. Anzeigemodul nach Anspruch 1, **dadurch gekennzeichnet, dass** es des Weiteren ein mit dem Stator verbundenes Gehäuse (2), eine mechanische Einheit zur Drosselung der Rotorgeschwindigkeit mit einem Abtriebsrad (9) umfasst, welches einen Zeiger (22) antreibt, und dadurch, dass besagtes spezifisches mechanisches Mittel des Zusammenspiels aus mindestens einem gebogenen Schleifarm (13, 15) besteht, der aus dem scheibenförmigen Teil des Abtriebsrad ausgestanzt wurde, und einer Gleitbahn (14), die mit diesem Gehäuse verbunden ist.

3. Anzeigemodul nach Anspruch 2, **dadurch gekennzeichnet, dass** besagter Schleifarm aus Polyoxymethylen-Polymer besteht.

4. Anzeigemodul nach den Ansprüchen 2 oder 3, **dadurch gekennzeichnet, dass** besagte Gleitbahn mit dem Ende (15) der Schleifstücke (13) in Berührung kommt.

5. Anzeigemodul nach Anspruch 4, **dadurch gekennzeichnet, dass** besagtes Ende gewölbt ist.

**6.** Anzeigemodul nach den Ansprüchen 2 bis 5, **dadurch gekennzeichnet, dass** es N flexible Schleifarme (13) enthält, deren gleitende Enden in einem Abstand von 360/N Grad zueinander stehen, wobei N gleich 2 oder 3 ist.

**7.** Anzeigemodul nach mindestens einem der vorhergehenden Ansprüche, **dadurch gekennzeichnet, dass** der Stator (4) einen ringförmigen Gürtel aufweist, wobei sich eine Zahnreihe (18) ausgehend von einem ringförmigen Segment, welches eine Befestigungsschulter (19) auf dem Gehäuse (2) bildet, das ein mechanisches Verbindungsmittel in komplementärer Form aufweist, radial erstreckt.

**8.** Anzeigemodul nach mindestens einem der vorhergehenden Ansprüche, **dadurch gekennzeichnet, dass** mindestens fünf Zähne radial gemessen identische Längen aufweisen.

**9.** Anzeigemodul nach mindestens einem der vorhergehenden Ansprüche, **dadurch gekennzeichnet, dass** die Länge der umwickelten Zähne identisch ist.

**10.** Anzeigemodul nach dem vorhergehenden Anspruch, **dadurch gekennzeichnet, dass** die Länge der Wicklung und die Länge der die Wicklung tragenden Zähne im Wesentlichen gleich lang, jedoch kleiner als der Querschnitt des ausgesparten mittigen Bereichs des Stators sind.

**11.** Anzeigemodul nach mindestens einem der vorhergehenden Ansprüche, **dadurch gekennzeichnet, dass** das Ende der Zähne quaderförmig ist.

**Claims**

**1.** A display module having a two-phase motor comprising a rotor (6) having N pairs of poles magnetized radially, in alternate directions, with N being equal to 3 or 5, and a stator part (4) having at least two W-shaped circuits made from radial pole teeth (20) extending inwards from a peripheral closed belt and having a coil (5) on the central leg of the W, with said W-shaped circuits being arranged in such a way that, when the central tooth of one of the W-shaped circuits is positioned facing a rotor magnetic transition, at least one central tooth of another W-shaped circuit is positioned facing a rotor magnetic pole, **characterized in that** it comprises at least one means of specific mechanical interaction (13, 14, 15) between the rotor and the stator, providing a dry angular friction at a force that is substantially constant depending on the speed of the rotor (6) relative to the stator (4), and at a value lower than the torque produced by the electromagnetic interaction between the rotor and the stator.

**2.** A display module according to claim 1, **characterized in that** it further comprises a case (2) integral with the stator, a rotor speed mechanical reduction assembly comprising an output wheel (9) driving a pointer (22) and **in that** said means of specific mechanical interaction consists of at least one bowed rubbing arm (13, 15) cut from the disc part of said output wheel and a sliding track (14) integral with said case.

**3.** A display module according to claim 2, **characterized in that** said rubbing arm is made of polyoxymethylene polymer.

**4.** A display module according to claims 2 or 3, **characterized in that** said sliding track comes into contact with the end (15) of said rubbers (13).

**5.** A display module according to claim 4, **characterized in that** said end has a domed shape.

**6.** A display module according to claims 2 to 5, **characterized in that** it comprises N flexible rubbing arms (13), the sliding ends of which are spaced apart by 360/N degrees, with N being equal to 2 or 3.

**7.** A display module according to at least one of the preceding claims, **characterized in that** the stator (4) has an annular belt, a set of teeth (18) radially extending from an annular portion forming a shoulder (19) for fixing on the case (2) having a mechanical coupling means with a matching shape.

**8.** A display module according to at least one of the preceding claims, **characterized in that** at least five teeth have identical radially measured lengths.

**9.** A display module according to at least one of the preceding claims, **characterized in that** the length of the coiled teeth is identical.

**10.** A display module according to the preceding claim, **characterized in that** the length of the coil and of the teeth carrying said coil are substantially equal but smaller than the section of the recessed central region of the stator.

**11.** A display module according to at least one of the preceding claims, **characterized in that** the end of the teeth is parallelepiped-shaped.

Fig. 1

Fig. 2

Fig. 3

Fig. 4

Fig. 5

Fig. 6

Fig. 7

Fig. 8

Fig. 9

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6043574 A
- FR 2807160
- JP 2004251354 B
- EP 1244200 A
- EP 1458082 A
- EP 1450138 A